(19)

Europäisches
Patentamt
European
Patent Office
Office européen
des brevets

(11) **EP 4 190 925 A1**

(12) **EUROPEAN PATENT APPLICATION**

(43) Date of publication:
**07.06.2023  Bulletin 2023/23**

(21) Application number: **21216155.8**

(22) Date of filing: **20.12.2021**

(51) International Patent Classification (IPC):
**C22B 7/00** (2006.01)          **C22B 26/12** (2006.01)
**H01M 10/54** (2006.01)       **C22B 23/02** (2006.01)
**C22B 47/00** (2006.01)       **B03C 1/02** (2006.01)
**B07B 1/22** (2006.01)          **B07B 1/28** (2006.01)

(52) Cooperative Patent Classification (CPC):
**C22B 7/001; B03C 1/30; C22B 7/009;
C22B 23/026; C22B 47/0009; H01M 10/54;**
B07B 2220/04

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.12.2021  KR 20210170935**

(71) Applicants:
• **AK tree Co., Ltd**
  **Seoul 06164 (KR)**
• **Ahn, Hyo Soo**
  **Ulsan 44784 (KR)**

(72) Inventor: **AHN, Hyo Soo**
  **44784 ULSAN (KR)**

(74) Representative: **reuteler & cie SA**
  **Chemin de la Vuarpillière 29**
  **1260 Nyon (CH)**

(54) **METHOD AND SYSTEM FOR SEPARATING CATHODE MATERIAL OF WASTE LITHIUM SECONDARY BATTERY USING OXIDATION REACTION OF ANODE MATERIAL AND REDUCTION REACTION OF CATHODE MATERIAL**

(57)     Proposed are a method and a system for separating a cathode material of a waste lithium secondary battery using an oxidation reaction of an anode material and a reduction reaction of the cathode material. When lithium is heated to a level where lithium can undergo an explosive reaction using the low-temperature pyrolysis system, the binder, the electrolyte, and the separator contained in the waste lithium secondary battery are gasified into syngas by the explosive reaction of lithium and the resulting syngas is removed. The reduction reaction of the cathode material and the oxidation reaction of the anode material are promoted by the continuous explosive reaction of lithium and the stirring action of the spiral. As a result, the black powder and the current collector mixture are extracted. Therefore, it is possible to improve the recovery rate of valuable metals to more than 97%, thereby improving recycling efficiency.

FIG. 1

EP 4 190 925 A1

**Description**

CROSS REFERENCE TO RELATED APPLICATION

The present application claims priority to Korean Patent Application No. 10-2021-0170935, filed December 2, 2021, the entire contents of which is incorporated herein for all purposes by this reference.

BACKGROUND OF THE INVENTION

Field of the Invention

The present disclosure relates to a method and a system for separating a cathode material of a waste lithium secondary battery using an oxidation reaction of an anode material and a reduction reaction of the cathode material. More particularly, the present disclosure relates to a method and a system for separating a cathode material of a waste lithium secondary battery using an oxidation reaction of an anode material and a reduction reaction of the cathode material, in which black powder is prepared so that cobalt (Co), nickel (Ni), and manganese (Mn), which are raw materials for the cathode material, can recover magnetism (or ferromagnetism) through the reduction reaction, whereby cathode active materials (Co, Ni, and Mn) attracted by a magnetic force are separated from an anode active material (C) moved in the opposite direction of the magnetic force during a magnetic separation process. As a result, valuable metals (raw materials) can be easily extracted, thereby securing the economic feasibility of recycling waste lithium secondary batteries.

Description of the Related Art

With the development of secondary battery technology and the rapid expansion of use of secondary batteries in various fields, lithium secondary batteries based on the ionization performance of lithium ions have become mainstream.
Lithium secondary batteries are used in transportation means such as automobiles, ships, drones, forklifts, bicycles, kickboards, etc.; energy storage systems (ESS); and portable energy storage devices for power tools, camping equipment, etc. The range of applications and uses of the lithium secondary batteries have been continuously increasing.
In particular, the global sales of electric vehicles in 2019 passed 2 million units, accounting for 2.5% of total new vehicle sales, and is expected to account for 25.3 million units in 2030.
This is largely attributable to the fact that the perception of consumers who were concerned about a low mileage due to the lack of battery technology has gradually improved, and the strengthening of carbon emission-related regulations and the provision of financial incentives such as subsidies have encouraged the purchase of electric vehicles.
Accordingly, the demand for lithium secondary batteries is rapidly increasing. To meet this demand, lithium secondary battery manufacturers are expanding their lithium secondary battery production plants mainly in the United States, Europe, and China.
In a new production plant for lithium secondary batteries, prototypes are produced and tested during the process of developing a final product. Although no company is disclosing data on the defect rate that occurs during the product development process, it is generally known that the defect rate reaches 80% in the early stage of lithium secondary battery development, and then gradually decreases and reaches around 15% to 10% when the production line is stabilized after 2 to 3 years.
Because more than about 5,000 tons of lithium secondary batteries are generally required to produce 1 Gwh, it is expected that defective products (process scraps) generated in a plant with a production capacity of 100 Gwh per year will be more than about 50,000 tons per year.
According to SNE Research, a market research company, the global production capacity of lithium secondary batteries is estimated to reach 4,222 Gwh in 2030, so it is expected that more than about 2.11 million tons of process scraps will also be generated worldwide.
Therefore, the importance of recycling of waste lithium secondary batteries increases as the size of the lithium secondary battery market rapidly increases.
To recycle a lithium waste secondary battery, it is necessary to separate a so-called black powder (or black mass, black sand, etc.) from copper and aluminum current collectors.
Currently, almost all companies around the world adopt a mechanical production method (recycling method) that crushes and shreds a lithium secondary battery using a shredder. This method is problematic in that the recovery rate of valuable metals from black powder is only at 70%, leading to a deterioration in economic feasibility and efficiency.
The reason is that the very thin current collectors and cathode and anode materials are strongly bonded together by binders, and it is difficult to effectively remove a separator.
Furthermore, the mechanical recycling method requires a process of separating an electrolyte of the lithium secondary battery before the process of shredding the battery. In this case, there is a serious problem in that volatile organic substances (Vocs), which are air pollutants, are generated during the process of separating the electrolyte, and hydrogen fluoride (HF), which is a toxic substance, is generated during the process of discharging salt water.

In particular, it is difficult to secure economic feasibility because there is no known technique to effectively separate the cathode material, which is composed of valuable metals, and the anode material, which is composed of graphite.

The types and characteristics of lithium secondary battery cathode materials are as follows.

A cathode material of a lithium secondary battery accounts for the largest share among four main materials (cathode material, anode material, separator, and electrolyte) of the secondary battery.

The cathode material is the source of lithium, and it releases and absorbs lithium from a crystal lattice of during battery charging and discharging. The capacity of the battery increases as the content of lithium contained in the cathode material increases, and the voltage of the battery increases as the potential difference between the anode material and the cathode material increases.

There are various types of cathode materials including NCM, NCA, LCO, LMO, LFP, etc. depending on manufacturers and purposes of use. The capacity and voltage of the battery are determined depending on which material is used.

Of these, the most commonly used in a ternary battery is NCM composed of nickel (Ni), cobalt (Co), and manganese (Mn). NCM is divided into NCM622, NCM811, $NCM9\frac{1}{2}\frac{1}{2}$, etc. depending on composition ratio.

When the content of nickel is large, the battery capacity increases, but the battery stability decreases. When the content of manganese is large, the battery cost is low and thermal safety is high, but the battery capacity decreases.

When the content of expensive cobalt is large, the stability and lifespan of the battery increase, but the economic feasibility decreases.

<Characteristics of major cathode materials>

Table 1

| Cathode material | Main characteristics |
|---|---|
| NCM (Nickel. Cobalt. Manganese) | It is the most commonly used cathode material, and Co, Ni, and Mn are present in a predetermined ratio in a transition metal layer of a layered structure. |
| NCA (Nickel. Cobalt. Aluminum) | It has high output and energy density compared to other materials such as NCM and LMO, and is mainly applied to power tools that require high output. |
| LCO (Lithium. Cobalt. Oxide) | It has high energy density and long lifespan, and is most widely used in the early stage of commercialization of lithium secondary batteries (mainly for small IT devices) The high price of cobalt, a rare metal. |
| LMO (Lithium Manganese. Oxide) | It is inexpensive by using manganese and has excellent structural stability with a three-dimensional tunnel structure, but has poor high-temperature characteristics. |
| LFP (Lithium Ferric Phosphate) | It is inexpensive by using iron instead of cobalt and has high stability, but needs improvement in terms of performance such as purity and electrical conductivity. |

A method of manufacturing a lithium secondary battery cathode material is as follows.

Currently, high-nickel batteries in which the content of cobalt is decreased and the content of nickel is increased are on the rise to increase battery capacity and secure economic feasibility. In line with this trend, the share of NCM and NCA in the cathode material market is increasing, and the production of LCO with a high cobalt content is shrinking due to a rise in cobalt price.

A cathode material with a layered structure such as NCM is manufactured in the form of Li $(Ni_xCo_yMn_z)$ $O_2$ by mixing a metal precursor such as cobalt, nickel, and manganese, and a lithium source ($Li_2CO_3$: lithium carbonate, LiOH: lithium hydroxide) and then firing the resulting mixture. A precursor refers to a compound that participates in a chemical reaction to generate another compound. In the production of cathode active materials, the precursor is a metal oxide or a metal hydroxide.

The precursor is mainly prepared by coprecipitation via a reaction of a metal mixed solution, caustic soda, ammonia, etc. using a chemical reactor. The coprecipitation refers to a method of simultaneously precipitating different ions in an aqueous solution or a solution.

The preparation of the precursor involves metal solution preparation, coprecipitation, cleaning, and drying. First, a metal solution is prepared by dissolving a metal in a strong acid solution such as sulfuric acid, and then a mixed metal solution is prepared by mixing various metal solutions to be applied to the active materials.

In the mixed metal solution, because metal ions are weakly bound to electrons in water molecules (oxygen), a complexing agent is added to facilitate precipitation. As the complexing agent, ammonia ($NH_3$) is mainly used. In this case, nitrogen in the ammonia provides electrons and is weakly bound to metal ions. Complex ions thus formed become a state of reacting stably with other anions. When a solution such as NaOH is added, the complex ions react with OH- ions to form hydroxide. This hydroxide is precipitated as it aggregates, and the resulting precipitate is cleaned and used as a precursor.

The outlook for the lithium secondary battery cathode material market is as follows.

The global demand for cathode materials for lithium secondary batteries is expected to increase from about 610,000 tons in 2020 to about 2.75 million tons in 2025.

As of 2018, NCM accounted for the largest share (43%) of the cathode materials, with about 156,000 tons, followed by LCO with 85,000 tons (23%) and LFP with 58,000 tons (16%), and NCA with 55,000 tons (15%). NCM, which accounted for the largest share of the cathode materials, is expected to increase to 72% by 2025.

In the future, as the demand for lithium secondary batteries increases due to the growth of the ESS market and the emergence of new demand for small batteries, the development of cathode materials is expected to be actively conducted mainly for high-capacity, high-safety, and low-price materials.

The characteristics of major raw materials for the lithium secondary battery cathode material are as follows.

1) Cobalt

Cobalt was discovered in 1735 and is an iron family element belonging to group 9 of the periodic table. The element is found in combination with arsenic or sulfur in nature. Cobalt is usually not mined alone and tends to be produced as a by-product of nickel refining.

Cobalt is a hard, ferromagnetic, silvery-white metal element with the symbol Co, atomic number 27, and specific gravity 8.9. It is a ferromagnetic metal, but loses magnetism when heated to 1,115°C. When oxidized, it is protected from further corrosion by forming a thin oxide layer on the metal surface.

Heating cobalt in oxygen produces cobalt(II,III) oxide which loses oxygen at 900°C to give cobalt (II) oxide.

Cobalt does not react with hydrogen gas or nitrogen gas even when heated, but does react with boron, carbon, phosphorus, arsenic, and sulfur. It is stable in air and does not react with water, but dissolves slowly in dilute acids.

Cobalt is used in the manufacture of magnets and high-strength alloys, and is also used in the manufacture of lithium secondary batteries, which are the core of the electronics industry.

Lithium secondary batteries are used as the main power source for future technologies such as hybrid and electric vehicles, as well as for everyday products such as computers, electronic products, and cameras. A significant amount of produced cobalt is used to make a cathode material for such lithium secondary batteries.

Cobalt, along with nickel and manganese, is a major material for a battery cathode material, and is the most expensive material, accounting for more than 20% of the total battery cost.

A smartphone contains about 10 g of cobalt, while a laptop contains 28 g of cobalt, and a single electric vehicle contains 5 to 9 kg of cobalt. As cobalt is used as a raw material for batteries, the global demand for cobalt has grown at an average annual rate of more than 8.8% since 2012. The demand for cobalt is expected to increase further due to an increase in demand for lithium secondary batteries for electric vehicles and the Internet of Things.

Cobalt, along with lithium, is a key raw material for electric vehicle batteries and is regarded as "a precious element" leading the 4th industrial revolution. The reason cobalt is expensive is that the DR Congo's cobalt reserves account for nearly half of the world's reserves and its scarcity is high due to small reserves.

According to the U.S. Geological Survey, total cobalt reserves worldwide are 7.1 million tons, and the world's annual cobalt production is 130,000 tons. The amount of cobalt used in lithium secondary batteries for electric vehicles is expected to increase to 150,000 to 700,000 tons in 2040.

Therefore, unless cobalt is extracted from used batteries, the demand for lithium secondary batteries for electric vehicles for carbon neutrality cannot be met, and the price is also expected to increase rapidly. As cobalt becomes inevitably scarce, the prevailing view is that 26% to 44% of the required quantity will be covered by battery recycling.

2) Nickel

Nickel is a silvery-white lustrous metal. It is an iron family element and is hard, malleable, and ductile. Nickel has the symbol Ni, atomic number 28, atomic weight 58.70, melting point 1,455°C, and specific gravity 8.845 (25°C).

Nickel occurs in combination with sulfur in millerite, with arsenic in niccolite, and with sulfur and arsenic in gersdorffite.

The electrical conductivity of nickel is 14.9% of that of copper. Nickel does not easily oxidize because it is more stable than iron against air and moisture, and has strong corrosion resistance to alkalis.

Nickel is one of the elements with ferromagnetism and is usually found together with cobalt. Nickel does not change in air and does not cause oxidation, so it is most often used for plating and alloys, and is also used as a colorant for electrical and electronic materials, glass, and ceramics.

Nickel's main uses are related to metallic nickel or alloys or pure elemental nickel, but some nickel compounds are also used for important purposes. Nickel compounds are used in the manufacture of rechargeable secondary batteries.

Nickel-cadmium batteries have grown in popularity since its first invention in 1899 as more electronic products are used in everyday life. Currently, nickel metal hybrid batteries (NiMH), which do not contain toxic cadmium and have a high electric charge capacity, are in the spotlight as secondary batteries replacing nickel-cadmium batteries for most electronic products including portable electronic products. Both of these batteries contain nickel hydroxide, a nickel compound.

According to a report by global market research firm "WoodMac", the global electric vehicle market, which passed 3 million units last year, is expected to grow rapidly to more than 32 million units in 2030. Accordingly, the demand for high-purity nickel, an essential raw material for high-capacity battery cathode materials, is also rapidly growing at an average annual rate of 23%, and a supply shortage is expected from 2025.

With the increase in demand for electric vehicles and the trend toward high-capacity cathode materials, the demand for nickel is expected to increase from 115,000 tons in 2021 to 12,133,000 tons in 2030. Automobile manufacturers such as Tesla and battery manufacturers such as LG Energy Solutions are also directly investing in resources to secure raw materials.

However, the supply of nickel is limited due to limited resources and the demand of global automobile manufacturers who require eco-friendly processes in nickel mining, so a supply shortage is expected to intensify from 2025.

3) Manganese

Manganese is not found in a pure form in nature but exists mainly in the form mixed with iron. It has the symbol Mn, atomic number 25, and specific gravity 7.21.

Manganese is a silvery-gray metal that resembles iron. It is hard and very brittle and difficult to melt. Manganese slowly oxidizes and rusts like iron in air or water containing oxygen. Manganese has similar properties to iron. It is moderately reactive and is soluble in cold, dilute non-oxidizing acid. Pure manganese becomes ferromagnetic after processing.

Manganese is obtained from aluminum or through reduction in a furnace. It is not used as a basic material for alloys, but is a general component of alloys based on other compounding systems. It has the property of greatly improving the physical and mechanical properties of alloys, so it is used as a main additive in alloys such as stainless steel.

Manganese dioxide is used as a negative electrode in zinc-carbon batteries and alkaline batteries.

During Volkswagen's recent Power Day, the company announced that it plans to gradually reduce battery costs in the entry-level segment by up to 50% and in the volume segment by up to 30%. The company also referred to a long-term strategy of using high-manganese cathode materials for the volume segment. The motivation for developing high-manganese cathode materials stemmed from a desire to reduce cost and eliminate cobalt consumption instead of improvement of energy density.

High-manganese cathode materials refer to several different materials. The options for high-manganese cathode materials include lithium-manganese oxide (LMO), lithium-nickel-manganese oxide (LNMO), lithium-manganese-rich (Li-Mn-rich, also abbreviated as LMR-NMC), lithium manganese phosphate (LMP), and lithium-manganese-iron phosphate (LMFP).

Meanwhile, China is expanding its influence by tightening its grip on the global supply of manganese, which is emerging as a battery material for electric vehicles. China accounts for more than 90% of the world's manganese supply. Manganese is attracting attention as it can replace expensive cobalt, although its use is not yet high as a battery material for electric vehicles.

Experts say that replacing cobalt with manganese can increase electric vehicle production by 30% with the same amount of nickel.

The ferromagnetism and diamagnetism of major materials for lithium secondary batteries are as follows.

1) Ferromagnetism

Ferromagnetism is a magnetic property of a material that can be magnetized by an external magnetic field and remain magnetized in the absence of the external field. In physics, several different types of magnetism are classified. Of these, ferromagnetism is the strongest type and derives from the exchange interaction between the spin and orbital angular momentum of electrons in the material. Ferromagnetic materials are the only materials capable of creating a force strong enough to be physically felt.

In the case of other paramagnetic or diamagnetic materials, they respond weakly to magnetic fields, but the forces are usually so weak that they can be detected only by sensitive laboratory instruments. An everyday example of ferromagnetic materials is a refrigerator magnet used to hold notes on a refrigerator door. This uses the attraction between a magnet and a ferromagnetic material.

Monatomic ferromagnetic materials include iron, nickel, cobalt, etc. Metal oxides such as manganese, iron oxide, chromium oxide, ferrite, etc. may also be ferromagnetic. Ferromagnetic alloys are mainly used as permanent magnets.

2) Diamagnetism

Diamagnetism is a weak repulsion of a material to a magnetic field. It is a form of magnetism that is only observed in the presence of an externally applied magnetic field. Diamagnetism is a very common phenomenon, and all materials exhibit a diamagnetic response to an applied magnetic field. This is because all materials have electrons.

Since diamagnetism is a weak property exhibited by all materials and is overshadowed in the presence of other forms of magnetism (ferromagnetism, paramagnetism, etc.), its effect is observable only in certain materials. Diamagnetic materials create an induced magnetic field opposite to an external magnetic field.

Diamagnetism is a quantum mechanical effect that is exhibited by all materials. When diamagnetism is the only contribution to the magnetism, the material is called diamagnetic. Representative diamagnetic materials include carbon (graphite), water, mercury, ethanol, zinc, copper, gold, silver, etc.

Meanwhile, a furnace or kiln is generally used in production facilities such as steel mills to reduce a large amount of metal oxide or to burn processed materials such as wastes safely and efficiently under high temperature.

In particular, in the case of the furnace for reducing metal oxide, it is necessary to heat the metal oxide to a high temperature and then cool it. For this purpose, a tunnel furnace or a rotary furnace is generally used to sequentially move and heat a large amount of metal oxide in the furnace.

In addition, a crucible is moved in the furnace while positioning the material to be heated and cooled, such as metal oxide. The crucible is an open type with an opening for facilitating introduction and discharge of the metal oxide. A method or apparatus for only reducing or melting metal oxide is generally known.

The conventional tunnel furnace (kiln) has the following problems: i) a large power is required to move a heavy bogie using an electric train; ii) the heating and cooling efficiency is lowered because the material for reduction and firing as well as the bogie are heated and cooled in the kiln; and iii) it is difficult to reduce or melt a metal compound because the kiln itself is difficult to form a reducing atmosphere.

Also, the rotary furnace has a problem in that a large amount of power is required to rotate a furnace body into which a heavy material is to be put.

In addition, such systems are mainly used only in the manufacture of steel materials, etc., and are not suitable for recycling lithium secondary batteries, which is problematic.

In the case of Korean Patent No. 10-2209517 (registration date: January 25, 2021), a plurality of oil burners and gas burners that heat a low-temperature pyrolysis device are installed. The external temperature (surface temperature) is 130°C to 170°C, and the internal temperature of the entrance of a syngas storage tank is 120°C to 160°. This system has the following problems: i) there is a possibility of air pollution because of the use of fossil fuels; ii) exhaust gas generated from fossil fuels has to be discharged, so enormous thermal energy is released into the atmosphere along with the exhaust gas; and iii) it is necessary to install an air pollution prevention device for the exhaust gas.

In addition, iv) it is difficult to precisely control the heating temperature of a low-temperature pyrolysis device; and v) it is difficult to apply future-oriented and eco-friendly technologies such as introduction of new and renewable energy.

Furthermore, black powder has to be cooled to room temperature, so the working process is delayed and economical efficiency is remarkably deteriorated.

The foregoing is intended merely to aid in the understanding of the background of the present disclosure, and is not intended to mean that the present disclosure falls within the purview of the related art that is already known to those skilled in the art.

Documents of Related Art

(Patent document 1) Korean Patent No. 10-2209517 (Registration Date: January 25, 2021)

SUMMARY OF THE INVENTION

Cobalt (Co), nickel (Ni), and manganese (Mn), which are cathode active materials constituting a cathode material (NCM) of a waste lithium secondary battery, are all ferromagnetic materials, but lose ferromagnetism and do not react to magnets because they are used for the cathode material in the form of oxide compounds in the manufacture of batteries. Graphite (C), which is an anode active material constituting an anode material of a waste lithium secondary battery, is a diamagnetic material that creates an induced magnetic field opposite to an external magnetic field when a magnet is brought nearby. Therefore, in the case of recycling lithium secondary batteries, it is necessary to recover cathode active materials, which are valuable metals, in order to secure economic feasibility and efficiency.

That is, securing a technology for effectively and economically separating a cathode active material from an anode active material has been emerged as the most important task.

When cathode active materials are recovered from lithium secondary battery black powder in which raw materials for cathode and anode materials are mixed, the best method is to separate the cathode material using a magnetic force because the cathode material is composed of ferromagnetic materials and the anode material is composed of diamagnetic materials. However, the ferromagnetic raw materials constituting the cathode material lose ferromagnetism because they are used in the form of oxide compounds.

Accordingly, the present disclosure has been made keeping in mind the above problem occurring in the related art, and an objective of the present disclosure is to provide a method and a system for separating a cathode material of a waste lithium secondary battery using an oxidation reaction of an anode material and a reduction reaction of the cathode material, in which black powder is prepared so that raw materials for the cathode material can recover magnetism (or ferromagnetism) through the reduction reaction, whereby cathode active materials (Co, Ni, and Mn) attracted by a magnetic force are separated from an anode active material (C) moved in the opposite direction of the magnetic force during a magnetic separation process. As a result, valuable metals (raw materials) can be easily extracted, thereby securing the economic feasibility of recycling waste lithium secondary batteries.

In order to achieve the above objective, according to one aspect of the present disclosure, there is provided a method of separating a cathode material of a waste lithium secondary battery using an oxidation reaction of an anode material and a reduction reaction of the cathode material, the method recovering cathode active materials (Co, Ni, and Mn) from black powder in which raw materials (Co, Ni, Mn, Li, and C) for the cathode and anode materials are mixed, the method including: (a) introducing a waste lithium secondary battery scrap into a low-temperature pyrolysis furnace of the low-temperature pyrolysis system, sealing inside of the low-temperature pyrolysis furnace, rotating and heating the low-temperature pyrolysis furnace to a temperature at which an explosive reaction of lithium occurs; (b) stopping the heating of the low-temperature pyrolysis furnace when the low-temperature pyrolysis furnace reaches a predetermined temperature, causing the explosive reaction of lithium contained in the waste lithium secondary battery scrap, inducing an increase in internal temperature of the low-temperature pyrolysis furnace by allowing the explosive reaction of lithium to continue while continuously rotating the low-temperature pyrolysis furnace, and gasifying an electrolyte, a separator, and a binder separated from the waste lithium secondary battery scrap and discharging the resulting syngas to outside of the low-temperature pyrolysis furnace; (c) preparing the black powder so that the cathode actives materials (Co, Ni, and Mn) of the cathode material recover magnetism (or ferromagnetism) by reducing the cathode material through an oxidation-reduction reaction between the cathode material and the anode material in the black powder; (d) extracting the black powder and a current collector mixture (Cu and Al) and transferring and discharging the black powder and the current collector mixture to outside of the low-temperature pyrolysis furnace; and (e) performing a magnetic separation process to separate the black powder into the cathode active materials (Co, Ni, and Mn) moved in the direction of a magnetic force and an anode active material (C) moved in the opposite direction of the magnetic force.

Furthermore, in step (c), under constant temperature and pressure conditions, the following Chemical Formula 1 may be used, Chemical Formula 1: $Li(Ni_xCo_yMn_z)O_2 + 2C = Li + xNi + yCo + zMn + 2CO$.

Furthermore, in step (a), a surface temperature of the low-temperature pyrolysis furnace may be maintained at 120°C to 200°C, and an internal temperature of the low-temperature pyrolysis furnace may be maintained at 140°C to 300°C.

Furthermore, in step (a), the low-temperature pyrolysis furnace may be heated to the temperature at which the explosive reaction of lithium occurs for 1 to 4 hours using an electric heating device; and in step (b), power of the electric heating device may be cut off, and the binder, the electrolyte, and the separator may be gasified for 2 to 8 hours and discharged as the temperature is continuously increased due to occurrence of the explosive reaction of lithium.

Furthermore, in step (c), the temperature may be continuously increased due to the explosive reaction of lithium, and the reduction reaction of the cathode material and the oxidation reaction of the anode material may be simultaneously performed for 10 to 18 hours through a stirring action by rotation of a spiral installed inside the low-temperature pyrolysis furnace.

Furthermore, a surface temperature of the low-temperature pyrolysis furnace may be maintained at 120°C to 180°C, and an internal temperature of the low-temperature pyrolysis furnace may be maintained at 140°C to 300°C.

Furthermore, the low-temperature pyrolysis furnace may be rotated in a predetermined direction in steps (a), (b), and (c), and the low-temperature pyrolysis furnace may be rotated in the opposite direction in step (d).

According to another aspect of the present disclosure, there is provided a system for separating a cathode material of a waste lithium secondary battery using an oxidation reaction of an anode material and a reduction reaction of the cathode material, the system recovering cathode active materials (Co, Ni, and Mn) from black powder in which raw materials (Co, Ni, Mn, Li, and C) for the cathode and anode materials are mixed, the system including: a low-temperature pyrolysis furnace rotatably supported on a base frame, and configured to heat and gasify a binder, an electrolyte, and a separator, which are organic compounds contained in a waste lithium secondary battery scrap, inside the low-temperature pyrolysis furnace into syngas, remove the resulting syngas, and extract the black powder and a current collector mixture (Cu and Al), the low-temperature pyrolysis furnace having an annular flange extended at each of front and rear ends thereof, an inlet formed at the front end thereof and into which the waste lithium secondary battery scrap is introduced, and a closed space formed therein; a low-temperature pyrolysis furnace rotation module configured to rotate the low-temperature pyrolysis furnace in a predetermined direction or in the opposite direction; an electric heating device fixedly installed on the base frame to surround an outside of the low-temperature pyrolysis furnace, and configured to heat the low-temperature pyrolysis furnace; a spiral installed inside the low-temperature pyrolysis furnace, and configured to stir the waste lithium secondary battery scrap and the black powder and to promote the reduction reaction of the cathode material and the oxidation reaction of the anode material; a bucket fixedly installed on an inner wall of the low-temperature pyrolysis furnace and configured to extract the black powder and the current collector mixture; a screw conveyor installed horizontally at the rear end of the low-temperature pyrolysis furnace, with an end being inserted into the low-temperature pyrolysis furnace, and configured to transfer the black powder and the current collector mixture; a syngas storage tank connected to the screw conveyor and a syngas discharge connection pipe and configured to store the syngas discharged from the low-temperature pyrolysis furnace; a main hopper configured to store the black powder and the current collector mixture extracted by the low-temperature pyrolysis furnace; and a magnetic separator configured to separate the black powder into the cathode active materials (Co, Ni, and Mn) moved in the direction of a magnetic force and an anode active material (C) moved in the opposite direction of the magnetic force.

Furthermore, an insulating material may be installed on an outer periphery of the electric heating device to prevent heat loss during low-temperature pyrolysis of the waste lithium secondary battery scrap.

Furthermore, the low-temperature pyrolysis furnace rotation module may include: a support roller rotatably supporting a lower outer peripheral surface of each of the respective flanges of the low-temperature pyrolysis furnace; a ring gear installed on an outer periphery of the flange at the rear end of the low-temperature pyrolysis furnace; a pinion gear fixedly installed on the base frame to be meshed with the ring gear; and a reduction geared motor fixedly installed on the base frame and configured to rotate the pinion gear.

Furthermore, the ring gear and the respective support rollers may be installed to be spaced apart from the low-temperature pyrolysis furnace to minimize heat conduction.

Furthermore, the electric heating device may be installed to surround the entire outer peripheral surface of the low-temperature pyrolysis furnace, and the electric heating device may be configured to be in close contact with the outer peripheral surface of the low-temperature pyrolysis furnace or to be spaced apart a predetermined gap from the outer peripheral surface of the low-temperature pyrolysis furnace.

Furthermore, the syngas generated as a result of heating and the explosive reaction of lithium in the low-temperature pyrolysis furnace may be introduced into the syngas storage tank through the syngas discharge connection pipe in a state in which a pressure of the low-temperature pyrolysis furnace is higher than atmospheric pressure (e.g., about 0.02 MPa), and then may be compressed and stored in the syngas storage tank by a vacuum pump.

Furthermore, the screw conveyor may include: a transfer screw configured to transfer the black powder and the current collector mixture; a transfer pipe having a transfer screw therein, an inlet at a front end thereof, and an outlet at a lower portion thereof; a transfer screw driving motor configured to rotate the transfer screw; and an opening/closing valve installed at the outlet.

As for the low-temperature pyrolysis furnace, a set of two low-temperature pyrolysis furnaces may be used. The low-temperature pyrolysis furnace may perform a cycle of introduction, heating, and stirring on the first day, and perform a cycle of extraction, introduction, heating, and stirring on the second day.

As described above, the present disclosure has the following advantages.

First, when lithium is heated to a level where lithium can undergo an explosive reaction using the low-temperature pyrolysis system, the binder, the electrolyte, and the separator contained in the waste lithium secondary battery are gasified into syngas by the explosive reaction of lithium and the resulting syngas is removed. The reduction reaction of the cathode material and the oxidation reaction of the anode material are promoted by the continuous explosive reaction of lithium and the stirring action of the spiral. As a result, the black powder and the current collector mixture are extracted. Therefore, it is possible to improve the recovery rate of valuable metals to more than 97%, thereby improving recycling efficiency. In addition, the valuable metals of the cathode material contained in the black powder recover magnetism (or ferromagnetism), which is a characteristic of the raw materials, through the reduction reaction, so it is possible to easily separate the expensive cathode material through magnetic separation, thereby greatly improving the economic efficiency of recycling waste lithium secondary batteries.

Second, while a conventional process takes about 2 to 3 days, the process according to the present disclosure is completed in one day through introduction (2 hr), heating and reduction (2 hr), stirring (12 hr), and discharge (2 hr), thereby greatly reducing the overall process time.

Third, the conventional process requires cooling of black powder in a heating furnace, so there is a limit to reducing the process time. However, in the present disclosure, the black powder is discharged directly into the main hopper, so the cooling time is not necessary, thereby greatly reducing the process time. In addition, the black powder is extracted at a high temperature and stored in the main hopper, so it is possible to more easily separate the cathode material from the anode material.

Fourth, the conventional process uses a gas heating method, so the heating time is 4 to 5 hours and exhaust gas inside the heating furnace has to be separately discharged. However, the present disclosure uses an electric heating method, so it is possible to reduce the heating time to 2 hours, and it is not necessary to separately discharge exhaust gas inside the low-temperature pyrolysis furnace. Also, it is possible to constantly maintain the internal temperature of the low-temperature pyrolysis furnace 110 at a high temperature of 140°C to 300°C.

BRIEF DESCRIPTION OF THE DRAWINGS

The above and other objectives, features, and other advantages of the present disclosure will be more clearly understood from the following detailed description when taken in conjunction with the accompanying drawings, in which:

FIG. 1 is a configuration view schematically illustrating a system for separating a cathode material of a waste lithium secondary battery using an oxidation reaction of an anode material and a reduction reaction of the cathode material according to the present disclosure;

FIG. 2 is a flowchart illustrating a method of separating a cathode material of a waste lithium secondary battery using an oxidation reaction of an anode material and a reduction reaction of the cathode material according to the present disclosure;

FIG. 3 is a block diagram illustrating the method of separating the cathode material of the waste lithium secondary battery using the oxidation reaction of the anode material and the reduction reaction of the cathode material according to the present disclosure;

FIG. 4 is a flowchart illustrating the method of separating the cathode material of the waste lithium secondary battery using the oxidation reaction of the anode material and the reduction reaction of the cathode material according to the present disclosure, in which black powder and a current collector mixture are separated, after which a cathode active material and an anode active material are separated through a magnetic separation process;

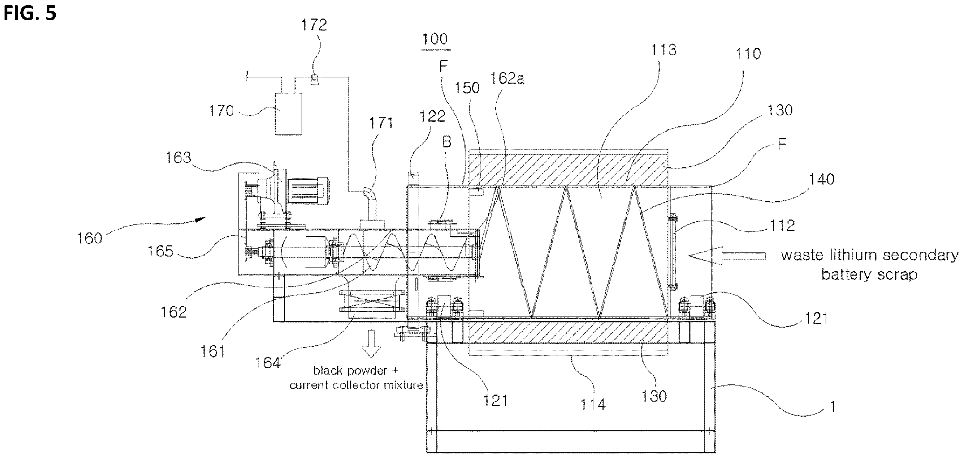

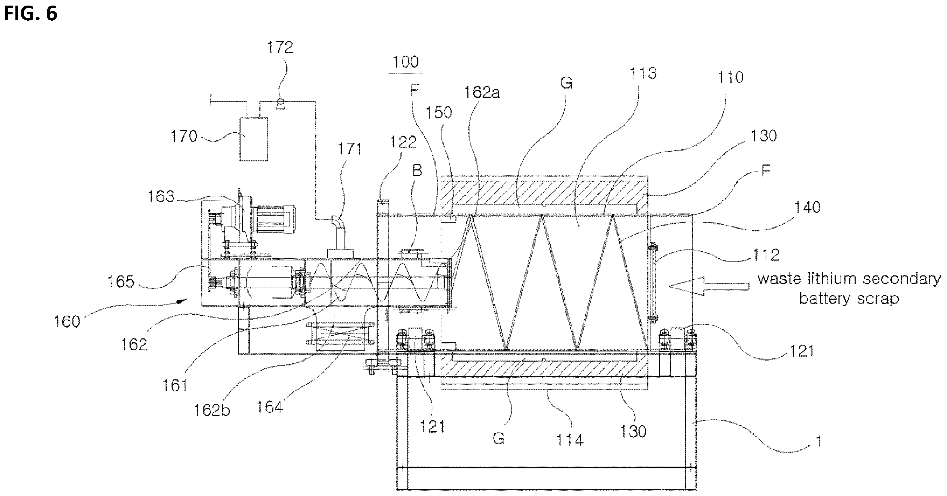

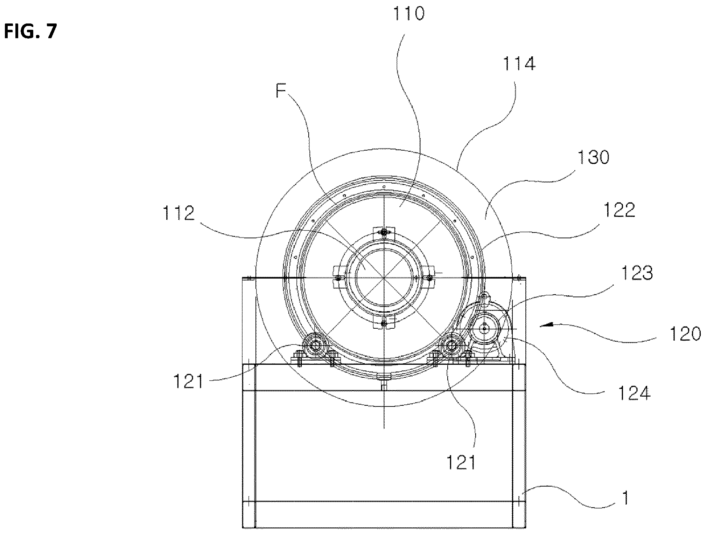

FIGS. 5 and 6 are configuration views specifically illustrating the system for separating the cathode material of the waste lithium secondary battery using the oxidation reaction of the anode material and the reduction reaction of the cathode material according to the present disclosure, in which FIG. 5 illustrates a configuration in which a electric heating device is in close contact with an outer circumferential surface of a low-temperature pyrolysis furnace, and FIG. 6 illustrates a configuration in which the electric heating device is installed with a predetermined gap from the outer circumferential surface of the low-temperature pyrolysis furnace; and FIG. 7 is a side view of FIG. 5.

DETAILED DESCRIPTION OF THE INVENTION

Hereinafter, a method and a system for separating a cathode material of a waste lithium secondary battery using an oxidation reaction of an anode material and a reduction reaction of the cathode material according to the present disclosure will be described in detail with reference to the accompanying drawings.

Wherever possible, the same reference numerals will be used throughout the drawings and the description to refer to the same or like elements or parts. It will be understood that, when the functions of conventional elements and the detailed description of elements related with the present disclosure may make the gist of the present disclosure unclear, a detailed description of those elements will be omitted.

Unless the context clearly indicates otherwise, it will be further understood that the terms "comprises", "comprising", "includes", and/or "including", when used herein, specify the presence of stated features or components, but do not preclude the presence or addition of one or more other features or components.

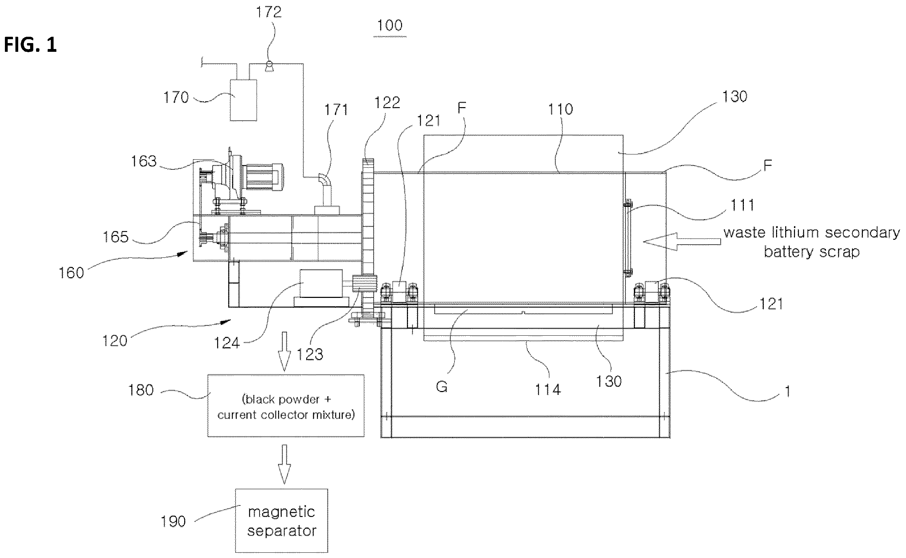

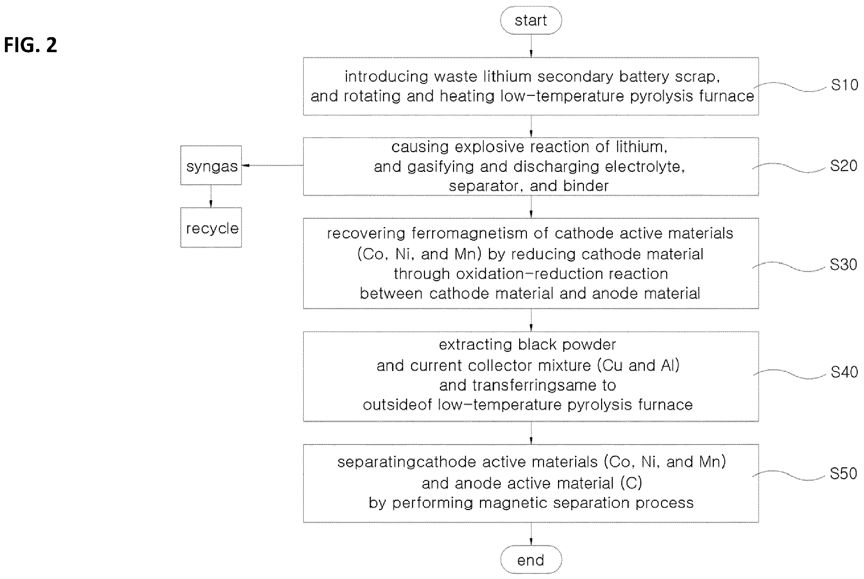

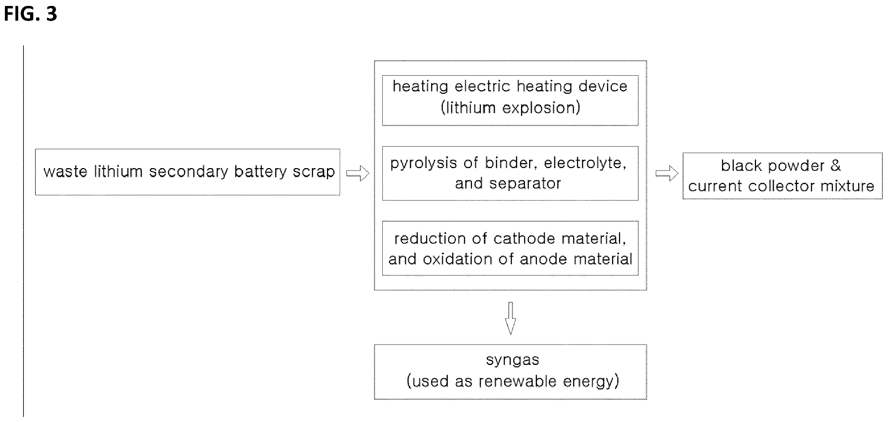

FIG. 1 is a configuration view schematically illustrating the system for separating the cathode material of the waste lithium secondary battery using the oxidation reaction of the anode material and the reduction reaction of the cathode material according to the present disclosure. FIG. 2 is a flowchart illustrating a method of separating a cathode material of a waste lithium secondary battery using an oxidation reaction of an anode material and a reduction reaction of the cathode material according to the present disclosure. FIG. 3 is a block diagram illustrating the method of separating the cathode material of the waste lithium secondary battery using the oxidation reaction of the anode material and the reduction reaction of the cathode material according to the present disclosure.

The method of separating the cathode material of the waste lithium secondary battery according to the present disclosure is a method of recovering, using the oxidation reaction of the anode material and the reduction reaction of the cathode material, cathode active materials (Co, Ni, and Mn), which are valuable metals, from black powder in which raw materials (Co, Ni, Mn, Li, and C) for the cathode and anode materials are mixed.

As illustrated in FIG. 2, the method of separating the cathode material of the waste lithium secondary battery according to the present disclosure has a technical feature in that a waste lithium secondary battery scrap is introduced into a low-temperature pyrolysis furnace 110 of a low-temperature pyrolysis system 100 illustrated in FIG. 1, and then the black powder and a current collector mixture (metal mixture) (Cu and Al) are extracted by causing an explosive reaction of lithium contained in the waste lithium secondary battery scrap. Here, the cathode material is reduced through an oxidation-reduction reaction between the cathode material and the anode material in the black powder so that the cathode active materials (Co, Ni, and Mn) recover magnetism (or ferromagnetism). After that, through a magnetic separation process, the black powder is easily separated into the cathode active materials (Co, Ni, and Mn) moved in the direction of a magnetic force and the anode active material (C) moved in the opposite direction of the magnetic force.

As for the low-temperature pyrolysis furnace 110, for example, a set of two low-temperature pyrolysis furnaces 110 may be used. The low-temperature pyrolysis furnace 110 may perform a cycle of introduction, heating, and stirring on the first day, and perform a cycle of extraction, introduction, heating, and stirring on the second day.

As illustrated in FIGS. 2 and 3, the method of separating the cathode material of the waste lithium secondary battery according to the present disclosure includes: (a) introducing the lithium waste secondary battery scrap into the low-temperature pyrolysis furnace 110 of the low-temperature pyrolysis system 100 illustrated in FIG. 1, sealing the inside of the low-temperature pyrolysis furnace 110, and rotating and heating the low-temperature pyrolysis furnace 110 to a temperature at which an explosive reaction of lithium occurs (S10); (b) stopping the heating of the low-temperature pyrolysis furnace 110 when the low-temperature pyrolysis furnace 110 reaches a predetermined temperature, causing the explosive reaction of lithium contained in the waste lithium secondary battery scrap, inducing an increase in the internal temperature of the low-temperature pyrolysis furnace 110 by allowing the explosive reaction of lithium to continue while continuously rotating the low-temperature pyrolysis furnace 110, and gasifying an electrolyte, a separator, and a binder separated from the waste lithium secondary battery scrap and discharging the resulting syngas to the outside of the low-temperature pyrolysis furnace 110 (S20); (c) preparing the black powder so that the cathode actives materials (Co, Ni, and Mn) of the cathode material recover magnetism (or ferromagnetism) by reducing the cathode material through the oxidation-reduction reaction between the cathode material and the anode material in the black powder (S30); (d) extracting the black powder and the current collector mixture (Cu and Al) and transferring and discharging the black powder and the current collector mixture to the outside of the low-temperature pyrolysis furnace 110 (S40); and (e) performing the magnetic separation process to separate the black powder into the cathode active materials (Co, Ni, and Mn) moved in the direction of the magnetic force and the anode active material (C) moved in the opposite direction of the magnetic force (S50).

With reference to FIGS. 1 to 3, the method of separating the cathode material of the waste lithium secondary battery using the oxidation reaction of the anode material and the reduction reaction of the cathode material according to the present disclosure will be described in detail as follows.

First, in step (a), the waste lithium secondary battery scrap is introduced into the low-temperature pyrolysis furnace 110 of the low-temperature pyrolysis system 100. As the waste lithium secondary battery scrap, a defective product (process scrap) generated during the production of lithium secondary batteries or a used lithium secondary battery (waste scrap) that has been used for electric vehicles, etc. and has reached the end of its lifespan is used.

The process scrap contains about 6% of a binder and a separator. The waste lithium secondary battery scrap contains about 4.7% of a binder and a separator, about 6% of a pouch packaging material, and about 15% of an electrolyte. After sealing the inside of the low-temperature pyrolysis furnace 110, the low-temperature pyrolysis furnace 110 is rotated and heated to the temperature at which the explosive reaction of lithium occurs (S10).

In step (a), the low-temperature pyrolysis furnace 110 is heated to the temperature at which the explosive reaction of lithium occurs for 1 to 4 hours using an electric heating device 130.

Here, to maintain the temperature at which the explosive reaction of lithium occurs, the surface temperature of the low-temperature pyrolysis furnace 110 may be maintained at 120°C to 200°C, and the internal temperature of the low-temperature pyrolysis furnace 110 may be maintained at 140°C to 300°C.

In step (b), the heating of the low-temperature pyrolysis furnace 110 is stopped when the low-temperature pyrolysis furnace 110 reaches the predetermined temperature, and the explosive reaction explosive reaction of lithium contained in the waste lithium secondary battery scrap is caused. The explosive reaction of lithium is allowed to continue while continuously rotating the low-temperature pyrolysis furnace 110, thereby inducing the increase in the internal temperature of the low-temperature pyrolysis furnace 110. The electrolyte, the separator, and the binder separated from the waste lithium secondary battery scrap are gasified into syngas and the resulting syngas is discharged to the outside of the low-temperature pyrolysis furnace 110 (S20).

In step (b), the power of the electric heating device 130 is cut off. As the temperature is continuously increased due to the occurrence of the explosive reaction of lithium, the binder, the electrolyte, and the separator are gasified for 2 to 8 hours into syngas, and the resulting syngas is discharged.

The syngas thus generated inside the low-temperature pyrolysis furnace 110 by the heating through the electric heating device 130 is stored in a syngas storage tank 170 through a synthesis discharge connection pipe 171 by compression of a pump 172. The syngas may be used as renewable energy afterwards.

As described above, on the first day, the waste lithium secondary battery scrap (for example, 15 tons) is introduced into the low-temperature pyrolysis furnace 110 and heated through the electric heating device 130 for about 1 to 4 hours to create an atmosphere in which the explosive reaction. As the internal temperature of the low-temperature pyrolysis furnace 110 is increased to 140°C to 300°C by the explosive reaction of lithium, the binder, the electrolyte, and the separator are gasified into syngas by pyrolysis and the resulting syngas is discharged and removed. Here, it is preferable that the external temperature (surface temperature) of the low-temperature pyrolysis furnace 110 is 120°C to 200°C. This is because when the external temperature of the low-temperature pyrolysis furnace 110 is less than 120°C, the explosive reaction of lithium does not occur efficiently, so that the electrolyte and the separator are not gasified and the binder is not separated. When the external temperature of the low-temperature pyrolysis furnace 110 exceeds 200°C, the excessive explosive reaction of lithium causes a rapid increase in the internal temperature of the low-temperature pyrolysis furnace 110, so that the cathode material and the current collector mixture become agglomerated and cannot be separated.

When the low-temperature pyrolysis furnace 110 is continuously rotated by driving a low-temperature pyrolysis furnace rotation module 120, the waste lithium secondary battery scrap is stirred by a spiral 140 installed inside the low-temperature pyrolysis furnace 110, and the explosive reaction of lithium is continuously induced. As the temperature is continuously increased, a condition is created in which the cathode material is reduced and the anode material is oxidized.

In step (c), the black powder is prepared so that the cathode actives materials (Co, Ni, and Mn) of the cathode material recover magnetism (or ferromagnetism) by reducing the cathode material through the oxidation-reduction reaction between the cathode material and the anode material in the black powder (S30).

In step (c), under constant temperature and pressure conditions, the following Chemical Formula 1 may be used.

$$\text{Chemical Formula 1:} \qquad Li(Ni_xCO_yMn_z)O_2 + 2C = Li + xNi + yCo + zMn + 2CO$$

In step (c), the temperature is continuously increased due to the explosive reaction of lithium, and the reduction reaction of the cathode material and the oxidation reaction of the anode material are simultaneously performed for 10 to 18 hours through a stirring action by the rotation of the spiral 140 (see FIG. 5) installed inside the low-temperature pyrolysis furnace 110.

Oxidation occurs when an element is combined with oxygen to form an oxide, and reduction occurs when oxygen is removed from an oxide to form an element. Each of the oxidation and reduction reactions is called a half-reaction, which is because the reactions always occur simultaneously. The oxidation and reduction reactions are collectively called an oxidation-reduction (redox) reaction.

Oxidation can be defined as the loss of one or more electrons in a substance (element, compound, ion, etc.) while reduction can be defined as the gain of one or more electrons in a substance. That is, the oxidation-reduction reaction consists of one oxidation half-reaction and one reduction half-reaction. When one atom loses one or more electrons, another atom has to gain those electrons.

Therefore, the oxidation-reduction reaction is a process in which electrons are transferred from one substance to another. In general, metal loses electrons and acts as a reducing agent, and non-metals with strong reactivity, such as oxygen and halogen elements, accept electrons and act as an oxidizing agent.

A substance that loses electrons to cause reduction is called a reducing agent, and a substance that gains electrons and causes oxidation is called an oxidizing agent. For example, an iron atom acts as the reducing agent in rusting of iron, and a carbon atom acts as the reducing agent while an iron atom acts as the oxidizing agent in the production of iron metal.

The cathode material of a lithium secondary battery is attached in an oxidized state of valuable metals, and carbon that can be used as an oxidizing agent is accumulated in the anode material. Thus, the cathode material may be reduced through an oxidation-reduction reaction between the cathode material and the anode material.

Lithium is used as a strong reducing agent in chemical reactions because it can be widely used in the form of lithium organic compounds such as n-butyllithium ($CH_3(CH_2)_3Li$), lithium hydrogen (LiH), lithium aluminum hydride ($LiAlH_4$), etc.

As described above, under constant temperature and pressure conditions, the following Chemical Formula 1 may be used.

$$\text{Chemical Formula 1:} \qquad Li(Ni_xCo_yMn_z)O_2 + 2C = Li + xNi + yCo + zMn + 2CO$$

In Chemical Formula 1, 2CO is in an unstable state, so it strongly binds to oxygen. Also, 2CO binds to oxygen particles contained in the cathode material because oxygen does not exist inside the sealed low-temperature pyrolysis furnace 110. As a result, 2CO acts as a catalyst to promote the reduction reaction of the cathode material, and is converted into carbon dioxide by gaining oxygen as illustrated in Chemical Formula 2 below to promote stabilization.

Chemical Formula 2: $2CO + O_2 = 2CO_2 \uparrow$

Through the process of Chemical Formula 2, the cathode material is reduced to a state in which it can be recovered as a metal (reduced metal), and a portion of graphite, which is the anode material, is oxidized and converted into carbon dioxide.

In step (d), the black powder and the current collector mixture (Cu and Al) are extracted and discharged to the outside of the low-temperature pyrolysis furnace 110 (S40).

For example, on the second day, the low-temperature pyrolysis furnace 110 is rotated in the opposite direction, causing the spiral 140 installed inside the low-temperature pyrolysis furnace 110 to discharge the black powder and the current collector mixture.

Referring to FIGS. 5 and 6, a bucket 150 installed on an inner wall of the low-temperature pyrolysis furnace 110 scoops the black powder and the current collector mixture in the low-temperature pyrolysis furnace 110 and pours the same into an inlet 162a of a transfer screw conveyor 160. As a transfer screw 161 is rotated by a transfer screw driving motor 163, the black powder and the current collector mixture are discharged through an outlet 162b. An opening/closing valve 164 prevents the leakage of syngas, prevents external air from being arbitrarily introduced into the low-temperature pyrolysis furnace 110, and is configured to be selectively opened when discharging the extracted black powder and current collector mixture to the outside of the low-temperature pyrolysis furnace 110. The temperature for the extraction of the black powder and the current collector mixture is preferably 70°C to 130°C. A specific configuration of the transfer screw conveyor 160 will be described later.

In step (e), the magnetic separation process is performed to separate the black powder into the cathode active materials (Co, Ni, and Mn) moved in the direction of the magnetic force and the anode active material (C) moved in the opposite direction of the magnetic force (S50).

In step (e), the black powder (Co, Ni, Mn, Li, and C) and the current collector mixture (Cu and Al) are separated by particle size. The current collector mixture is shredded and then separated into copper (Cu) and aluminum (Al) by a vibration specific gravity separation method, for example. The black powder is separated into a first part containing cobalt (Co), nickel (Ni), and manganese (Mn) that has recovered magnetism (or ferromagnetism) and a second part containing lithium (Li) and graphite (C) and separated from the first part by the magnetic force.

In addition, the black powder and the current collector mixture (Cu and Al) may be easily discharged to the outside of the low-temperature pyrolysis furnace 110 by performing stirring by rotating the low-temperature pyrolysis furnace 110 in a predetermined direction in steps (a), (b), and (c) and then by rotating the low-temperature pyrolysis furnace 110 in the opposite direction in step (d) .

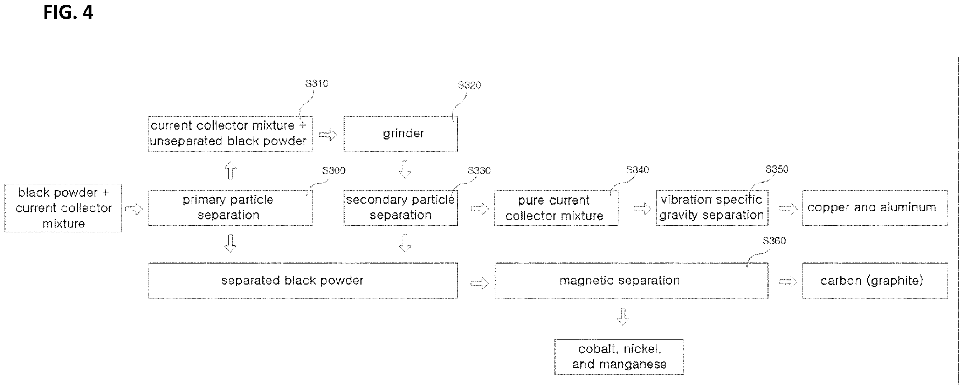

FIG. 4 is a flowchart illustrating the method of separating the cathode material of the waste lithium secondary battery using the oxidation reaction of the anode material and the reduction reaction of the cathode material according to the present disclosure, in which the black powder and the current collector mixture (Cu and Al) are separated, after which the cathode active materials (Co, Ni and Mn) and the anode active material (C) are separated through a magnetic separation process.

Referring to FIG. 1, the black powder and the current collector mixture (Cu and Al) are extracted, discharged the outside of the low-temperature pyrolysis furnace 110, and fed to a main hopper 180. Here, the black powder and the current collector mixture (Cu and Al) account for 94% of the total weight of the waste secondary battery.

As illustrated in FIG. 4, the black powder and the current collector mixture (Cu and Al) are introduced into a primary particle separation device (e.g., a three to four stage twist vibrating separator: Φ=1,200 and H=1,000), which is a component of a magnetic separator (190), and are separated by size (S300).

In step S300, large particles of the black powder are not separated by primary particle separation, but remain mixed with the current collector mixture in step S310. Therefore, the current collector mixture and unseparated black powder are finely grinded by a grinder which is a component of the magnetic separator 190 (S320).

Thereafter, the grinded current collector mixture and unseparated black powder are introduced into a secondary particle separation device (e.g., a three-stage vibrating particle separator), which is a component of the magnetic separator 190, and are separated by size (S330), so that the current collector mixture not mixed with the black powder is obtained (S340). Small particles of the black powder are separated by the primary particle separation to separate the black powder again (S310).

Thereafter, the current collector mixture, which accounts for 15% of the total weight of the waste secondary battery, is introduced into a vibration specific gravity separator, which is a component of the magnetic separator 190, and is separated by specific gravity under vibration into copper (Cu) and aluminum (Al) (S350).

Thereafter, the black powder in which the raw materials (Co, Ni, Mn, Li, and C) for the cathode material and the anode material are mixed is subjected to the magnetic separation process, so that cobalt (Co), nickel (Ni), and manganese (Mn) that have recovered magnetism (or ferromagnetism) by the reduction reaction are separated from lithium (Li) and graphite (carbon) (C) (S360).

In step S360, since the raw materials for the cathode material recover magnetism (or ferromagnetism) through the reduction reaction in the previous process, the cathode active materials (Co, Ni, and Mn) attracted by the magnetic force are separated from the anode active material (C) moved in the opposite direction of the magnetic force during the magnetic separation process. As a result, the cathode active materials (Co, Ni, and Mn), which are valuable metals, can be easily extracted, thereby securing the economic feasibility of recycling waste lithium secondary batteries.

Furthermore, although not illustrated in the drawings, lithium (Li) may be extracted by performing dust collection during the particle separation process and the magnetic separation process.

FIGS. 5 and 6 are configuration views specifically illustrating the system for separating the cathode material of the waste lithium secondary battery using the oxidation reaction of the anode material and the reduction reaction of the cathode material according to the present disclosure, in which FIG. 5 illustrates a configuration in which a electric heating device is in close contact with an outer circumferential surface of a low-temperature pyrolysis furnace, and FIG. 6 illustrates a configuration in which the electric heating device is installed with a predetermined gap from the outer circumferential surface of the low-temperature pyrolysis furnace. FIG. 7 is a side view of FIG. 5.

Referring to FIGS. 5 to 7, the system for separating the cathode material of the waste lithium secondary battery using the oxidation reaction of the anode material and the reduction reaction of the cathode material according to the present disclosure is an apparatus for separating a cathode material of a waste lithium secondary battery to recover cathode active materials (Co, Ni, and Mn) from black powder in which cathode and anode materials (Co, Ni, Mn, Li, and C) are mixed. The system may include a low-temperature pyrolysis furnace 110, a low-temperature pyrolysis furnace rotation module 120, an electric heating device 130, a spiral 140, a bucket 150, a screw conveyor 160, a syngas storage tank 170, a main hopper 180, and a magnetic separator 190.

Hereinafter, the configuration of the system for separating the cathode material of the waste lithium secondary battery according to the present disclosure will be described in detail as follows.

First, the low-temperature pyrolysis furnace 110 is rotatably supported on a base frame 1. The low-temperature pyrolysis furnace 110 heats and gasifies a binder, an electrolyte, and a separator, which are organic compounds contained in a waste lithium secondary battery scrap, inside the low-temperature pyrolysis furnace 110 into syngas, removes the resulting syngas, and extracts the black powder and a current collector mixture (metal mixture) (Cu and Al).

The low-temperature pyrolysis furnace 110 has an annular flange F extended at each of front and rear ends thereof, an inlet 112 formed at the front end thereof and into which the waste lithium secondary battery scrap is introduced, and a closed space 113 formed therein.

The low-temperature pyrolysis furnace 110 may be configured as, for example, a rotary kiln.

In detail, the low-temperature pyrolysis furnace 110 may have a cylindrical shape to accommodate a predetermined amount (e.g., 15 tons) of waste lithium secondary battery scrap, and is configured to be rotatable by the low-temperature pyrolysis furnace rotation module 120.

The respective annular flanges F are formed at the front and rear ends of the low-temperature pyrolysis furnace 110. The inlet 112 at the front end of the low-temperature pyrolysis furnace 110 is configured to be opened and closed so that the low-temperature pyrolysis furnace 110 is blocked after the introduction of the waste lithium secondary battery scrap. The reason for providing the annular flanges F is to prevent heat loss by preventing a support roller 121 from direct contact with the low-temperature pyrolysis furnace 110 under high temperature.

The low-temperature pyrolysis furnace 110 is preferably designed with a large capacity (e.g., about 40 m$^3$, diameter 3.200 mm, and length 5,000 mm) to accommodate a large amount of waste lithium secondary battery scrap in one operation.

The airtightness inside the low-temperature pyrolysis furnace 110 has to be continuously maintained to achieve efficient pyrolysis by an explosive reaction of lithium and to facilitate the reduction reaction of the cathode material and the oxidation reaction of anode material. To prevent heat loss during low-temperature pyrolysis of the waste lithium secondary battery scrap, an insulating material 114 is preferably installed on the outer periphery of the electric heating device 130.

In addition, the low-temperature pyrolysis furnace rotation module 120 is a device for rotating the low-temperature pyrolysis furnace 110 in a predetermined direction or in the opposite direction.

As illustrated in FIGS. 1, 5 and 7, the low-temperature pyrolysis furnace rotation module 120 may include the support roller 121 rotatably supporting a lower outer peripheral surface of each of the flanges F of the low-temperature pyrolysis furnace 110; a ring gear 122 installed on the outer periphery of the flange F at the rear end of the low-temperature pyrolysis furnace 110; a pinion gear 123 fixedly installed on the base frame 1 to be meshed with the ring gear 122; and a reduction geared motor 124 fixedly installed on the base frame 1 to rotate the pinion gear 123.

In a state in which the respective support rollers 121 rotatably support the lower outer peripheral surfaces of the flanges F of the low-temperature pyrolysis furnace 110, as the reduction geared motor 124 rotates the pinion gear 123, the ring gear 122 meshed with the pinion gear 123 is rotated to cause rotation of the low-temperature pyrolysis furnace 110. The installation position and number of the support rollers 121 may vary depending on design conditions. The support rollers 121 are preferably made of a material with low heat conduction to minimize heat conduction.

To minimize heat conduction from the low-temperature pyrolysis furnace 110, the ring gear 122 and the support rollers 121 are configured to be in contact the outer peripheral surfaces of the annular flanges F extended at the front and rear ends of the low-temperature pyrolysis furnace 110.

Furthermore, to minimize heat loss of the low-temperature pyrolysis furnace 110, it is preferable that the outer peripheral surface of the low-temperature pyrolysis furnace 110 is spaced apart a predetermined distance from the base frame 1, and the ring gear 122 is made of a material with low heat conduction.

The electric heating device 130 may be installed on the outside of the low-temperature pyrolysis furnace 110 to heat the low-temperature pyrolysis furnace 110.

Since the electric heating device 130 uses an electric heating method, the heating time is greatly reduced to 2 hours, and it is not necessary to separately discharge exhaust gas inside the low-temperature pyrolysis furnace 110. In addition, the internal temperature of the low-temperature pyrolysis furnace 110 is maintained constantly at a high temperature of 140°C to 300°C.

The electric heating device 130 is installed to surround the entire outer peripheral surface of the low-temperature pyrolysis furnace 110, and is fixed to the base frame 1.

The electric heating device130 may be configured to be in close contact with the outer peripheral surface of the low-temperature pyrolysis furnace 110 (refer to FIG. 5) or may be configured to be spaced apart a predetermined gap G from the outer peripheral surface of the low-temperature pyrolysis furnace 110 (refer to FIG. 6).

The spiral 140 is fixedly installed on an inner wall of the low-temperature pyrolysis furnace 110 in a spiral structure to stir the waste lithium secondary battery scrap and the black powder and to promote the reduction reaction of the cathode material and the oxidation reaction of the anode material.

The screw conveyor 160 is installed horizontally at the rear end of the low-temperature pyrolysis furnace 110, with an end being inserted into the low-temperature pyrolysis furnace 110. The screw conveyor 160 transfers the black powder and the current collector mixture.

The screw conveyor 160 is installed horizontally and provides a passage for allowing the black powder (Co, Ni, Mn, Li, and C) and the current collector mixture (metal mixture) (Cu and Al), and syngas to be discharged therethrough. The black powder (Co, Ni, Mn, Li, and C) and the current collector mixture (metal mixture) (Cu and Al) are generated in the low-temperature pyrolysis furnace 110 as a result of pyrolysis and an oxidation-reduction reaction of metal, and the syngas is generated in the low-temperature pyrolysis furnace 110.

The screw conveyor 160 may include: a transfer screw 161 for transferring the black powder and the current collector mixture; a transfer pipe 162 having a transfer screw 161 therein and an outlet 162b at a lower portion thereof; a transfer screw driving motor 163 for rotating the transfer screw 161; and an opening/closing valve 164 installed at the outlet 162b.

A bearing B is installed between the transfer pipe 162 and the flanges F of the low-temperature pyrolysis furnace 110 to enable rotation of the low-temperature pyrolysis furnace 110. A gasket (not illustrated), etc. is installed to prevent a gap (to prevent gas leakage) between the transfer pipe 162 and the low-temperature pyrolysis furnace 110.

The transfer screw 161 is installed in the transfer pipe 162. The transfer screw 161 is configured to be rotatable by the transfer screw driving motor 163. The power of the transfer screw driving motor 163 is transmitted to the transfer screw 161 through a belt 165.

An inlet 162a is formed at an upper side of a front end of the transfer pipe 162, and the bucket 150 is installed on the inner wall of the low-temperature pyrolysis furnace 110. Therefore, when the low-temperature pyrolysis furnace 110 is rotated, the spiral 140 moves the black powder and the current collector mixture toward the screw conveyor 160, and the bucket 150 repeats the process of introducing the black powder and the current collector mixture into the inlet 162a while being moved from bottom to top inside the low-temperature pyrolysis furnace 110.

The syngas storage tank 170 is connected to the screw conveyor 160 and a syngas discharge connection pipe 171 to store the syngas discharged from the low-temperature pyrolysis furnace 110. The syngas compressed and stored in the syngas storage tank 170 may be used as renewable energy afterwards.

The syngas generated as a result of heating and the explosive reaction of lithium in the low-temperature pyrolysis furnace 110 is introduced into the syngas storage tank 170 through the syngas discharge connection pipe 171 in a state in which the pressure of the low-temperature pyrolysis furnace 110 is higher than atmospheric pressure (e.g., about 0.02 MPa), and then is compressed and stored in the syngas storage tank 170 by a vacuum pump 172.

The black powder and the current collector mixture extracted by the low-temperature pyrolysis furnace 110 are supplied to the main hopper 180.

The main hopper 180 may be made of metal because the black powder (Co, Ni, Mn, Li, and C) and the current collector mixture (Cu and Al) are in a very hot state (e.g., 80 to 150°C) at the time of extraction.

The black powder (Co, Ni, Mn, Li, and C) and the current collector mixture (Cu and Al) may be transferred to the magnetic separator 190 using a transfer means (not illustrated) such as the screw conveyor 160, an elevator conveyor, or a blower.

The magnetic separator 190 separates the black powder into the cathode active materials (Co, Ni, and Mn) moved in the direction of a magnetic force from and the anode active material (C) moved in the opposite direction of the magnetic force.

As described above, the present disclosure has the following advantages.

First, when lithium is heated to a level where lithium can undergo an explosive reaction using the low-temperature pyrolysis system, the binder, the electrolyte, and the separator contained in the waste lithium secondary battery are gasified into syngas by the explosive reaction of lithium and the resulting syngas is removed. The reduction reaction of the cathode material and the oxidation reaction of the anode material are promoted by the continuous explosive reaction of lithium and the stirring action of the spiral. As a result, the black powder and the current collector mixture are extracted. Therefore, it is possible to improve the recovery rate of valuable metals to more than 97%, thereby improving recycling efficiency. In addition, the valuable metals of the cathode material contained in the black powder recover magnetism (or ferromagnetism), which is a characteristic of the raw materials, through the reduction reaction, so it is possible to easily separate the expensive cathode material through magnetic separation, thereby greatly improving the economic efficiency of recycling waste lithium secondary batteries.

Second, while a conventional process takes about 2 to 3 days, the process according to the present disclosure is completed in one day through introduction (2 hr), heating and reduction (2 hr), stirring (12 hr), and discharge (2 hr), thereby greatly reducing the overall process time.

Third, the conventional process requires cooling of black powder in a heating furnace, so there is a limit to reducing the process time. However, in the present disclosure, the black powder is discharged directly into the main hopper, so the cooling time is not necessary, thereby greatly reducing the process time. In addition, the black powder is extracted at a high temperature and stored in the main hopper, so it is possible to more easily separate the cathode material from the anode material.

Fourth, the conventional process uses a gas heating method, so the heating time is 4 to 5 hours and exhaust gas inside the heating furnace has to be separately discharged. However, the present disclosure uses an electric heating method, so it is possible to reduce the heating time to 2 hours, and it is not necessary to separately discharge exhaust gas inside the low-temperature pyrolysis furnace. Also, it is possible to constantly maintain the internal temperature of the low-temperature pyrolysis furnace 110 at a high temperature of 140°C to 300°C.

Although preferred embodiments of the present disclosure has been described for illustrative purposes, those skilled in the art will appreciate that various modifications, additions, and substitutions are possible, without departing from the scope and spirit of the disclosure as defined in the accompanying claims.

## Claims

1. A method of separating a cathode material of a waste lithium secondary battery using an oxidation reaction of an anode material and a reduction reaction of the cathode material, the method recovering cathode active materials (Co, Ni, and Mn) from black powder in which raw materials (Co, Ni, Mn, Li, and C) for the cathode and anode materials are mixed, the method comprising:

   (a) introducing a waste lithium secondary battery scrap into a low-temperature pyrolysis furnace (110) of the low-temperature pyrolysis system, sealing inside of the low-temperature pyrolysis furnace (110), rotating and heating the low-temperature pyrolysis furnace (110) to a temperature at which an explosive reaction of lithium occurs (S10);

   (b) stopping the heating of the low-temperature pyrolysis furnace (110) when the low-temperature pyrolysis furnace (110) reaches a predetermined temperature, causing the explosive reaction of lithium contained in the waste lithium secondary battery scrap, inducing an increase in internal temperature of the low-temperature pyrolysis furnace (110) by allowing the explosive reaction of lithium to continue while continuously rotating the low-temperature pyrolysis furnace (110), and gasifying an electrolyte, a separator, and a binder separated from the waste lithium secondary battery scrap and discharging the resulting syngas to outside of the low-temperature pyrolysis furnace (110) (S20);

   (c) preparing the black powder so that the cathode actives materials (Co, Ni, and Mn) of the cathode material recover magnetism (or ferromagnetism) by reducing the cathode material through an oxidation-reduction reaction between the cathode material and the anode material in the black powder (S30);

   (d) extracting the black powder and a current collector mixture (Cu and Al) and transferring and discharging the black powder and the current collector mixture to outside of the low-temperature pyrolysis furnace (110) (S40); and

(e) performing a magnetic separation process to separate the black powder into the cathode active materials (Co, Ni, and Mn) moved in the direction of a magnetic force and an anode active material (C) moved in the opposite direction of the magnetic force (S50).

2. The method of claim 1, wherein in step (c), under constant temperature and pressure conditions, the following Chemical Formula 1 is used,

Chemical Formula 1:  $Li(Ni_xCo_yMn_z)O_2 + 2C = Li + xNi + yCo + zMn + 2CO$.

3. The method of claim 1, wherein in step (a), a surface temperature of the low-temperature pyrolysis furnace (110) is maintained at 120°C to 200°C, and an internal temperature of the low-temperature pyrolysis furnace (110) is maintained at 140°C to 300°C.

4. The method of claim 1, wherein in step (a), the low-temperature pyrolysis furnace (110) is heated to the temperature at which the explosive reaction of lithium occurs for 1 to 4 hours using an electric heating device (130); and in step (b), power of the electric heating device (130) is cut off, and the binder, the electrolyte, and the separator are gasified for 2 to 8 hours and discharged as the temperature is continuously increased due to occurrence of the explosive reaction of lithium.

5. The method of claim 1 or 3, wherein in step (c), the temperature is continuously increased due to the explosive reaction of lithium, and the reduction reaction of the cathode material and the oxidation reaction of the anode material are simultaneously performed for 10 to 18 hours through a stirring action by rotation of a spiral (140) installed inside the low-temperature pyrolysis furnace (110).

6. The method of claim 1, wherein the low-temperature pyrolysis furnace (110) is rotated in a predetermined direction in steps (a), (b), and (c), and the low-temperature pyrolysis furnace (110) is rotated in the opposite direction in step (d).

7. A method of separating a cathode material of a waste lithium secondary battery using an oxidation reaction of an anode material and a reduction reaction of the cathode material, the method recovering cathode active materials (Co, Ni, and Mn) from black powder in which raw materials (Co, Ni, Mn, Li, and C) for the cathode and anode materials are mixed, the method comprising:

introducing a waste lithium secondary battery scrap into a low-temperature pyrolysis furnace (110) of a low-temperature pyrolysis system (100): and
extracting the black powder and a current collector mixture (Cu and Al) by causing an explosive reaction of lithium contained in a waste lithium secondary battery scrap,
wherein the cathode material is reduced through an oxidation-reduction reaction between the cathode material and the anode material in the black powder so that the cathode active materials (Co, Ni, and Mn) recover magnetism (or ferromagnetism), after which a magnetic separation process is performed to separate the black powder into the cathode active materials (Co, Ni, and Mn) moved in the direction of a magnetic force and an anode active material (C) moved in the opposite direction of the magnetic force.

8. A system for separating a cathode material of a waste lithium secondary battery using an oxidation reaction of an anode material and a reduction reaction of the cathode material, the system recovering cathode active materials (Co, Ni, and Mn) from black powder in which raw materials (Co, Ni, Mn, Li, and C) for the cathode and anode materials are mixed, the system comprising:

a low-temperature pyrolysis furnace (110) rotatably supported on a base frame (1), and configured to heat and gasify a binder, an electrolyte, and a separator, which are organic compounds contained in a waste lithium secondary battery scrap, inside the low-temperature pyrolysis furnace (110) into syngas, remove the resulting syngas, and extract the black powder and a current collector mixture (Cu and Al), the low-temperature pyrolysis furnace having an annular flange (F) extended at each of front and rear ends thereof, an inlet (112) formed at the front end thereof and into which the waste lithium secondary battery scrap is introduced, and a closed space (113) formed therein;
a low-temperature pyrolysis furnace rotation module (120) configured to rotate the low-temperature pyrolysis furnace (110) in a predetermined direction or in the opposite direction;
an electric heating device (130) fixedly installed on the base frame (1) to surround an outside of the low-temperature pyrolysis furnace (110), and configured to heat the low-temperature pyrolysis furnace (110);

a spiral (140) installed inside the low-temperature pyrolysis furnace (110), and configured to stir the waste lithium secondary battery scrap and the black powder and to promote the reduction reaction of the cathode material and the oxidation reaction of the anode material;

a bucket (150) fixedly installed on an inner wall of the low-temperature pyrolysis furnace (110) and configured to extract the black powder and the current collector mixture;

a screw conveyor (160) installed horizontally at the rear end of the low-temperature pyrolysis furnace (110), with an end being inserted into the low-temperature pyrolysis furnace (110), and configured to transfer the black powder and the current collector mixture;

a syngas storage tank (170) connected to the screw conveyor (160) and a syngas discharge connection pipe (171) and configured to store the syngas discharged from the low-temperature pyrolysis furnace (110);

a main hopper (180) configured to store the black powder and the current collector mixture extracted by the low-temperature pyrolysis furnace (110); and

a magnetic separator (190) configured to separate the black powder into the cathode active materials (Co, Ni, and Mn) moved in the direction of a magnetic force and an anode active material (C) moved in the opposite direction of the magnetic force.

9. The system of claim 8, wherein an insulating material (114) is installed on an outer periphery of the electric heating device (130) to prevent heat loss during low-temperature pyrolysis of the waste lithium secondary battery scrap.

10. The system of claim 8, wherein the low-temperature pyrolysis furnace rotation module (120) comprises:

a support roller (121) rotatably supporting a lower outer peripheral surface of each of the respective flanges (F) of the low-temperature pyrolysis furnace (110);

a ring gear (122) installed on an outer periphery of the flange (F) at the rear end of the low-temperature pyrolysis furnace (110);

a pinion gear (123) fixedly installed on the base frame (1) to be meshed with the ring gear (122); and

a reduction geared motor (124) fixedly installed on the base frame (1) and configured to rotate the pinion gear (123).

11. The system of claim 10, wherein the ring gear (122) and the respective support rollers (121) are installed to be spaced apart from the low-temperature pyrolysis furnace (110) to minimize heat conduction.

12. The system of claim 10, wherein the electric heating device (130) is installed to surround the entire outer peripheral surface of the low-temperature pyrolysis furnace (110), and the electric heating device (130) is configured to be in close contact with the outer peripheral surface of the low-temperature pyrolysis furnace (110) or to be spaced apart a predetermined gap (G) from the outer peripheral surface of the low-temperature pyrolysis furnace (110).

13. The system of claim 8, wherein the syngas generated as a result of heating and the explosive reaction of lithium in the low-temperature pyrolysis furnace (110) is introduced into the syngas storage tank (170) through the syngas discharge connection pipe (171) in a state in which a pressure of the low-temperature pyrolysis furnace (110) is higher than atmospheric pressure, and then is compressed and stored in the syngas storage tank (170) by a vacuum pump (172).

14. The system of claim 8, wherein the screw conveyor (160) comprises:

a transfer screw (161) configured to transfer the black powder and the current collector mixture;

a transfer pipe (162) having a transfer screw (161) therein, an inlet (162a) at a front end thereof, and an outlet (162b) at a lower portion thereof;

a transfer screw driving motor (163) configured to rotate the transfer screw (161); and

an opening/closing valve (164) installed at the outlet (162b).

15. The system of claim 14, wherein the inlet (162a) is formed at an upper side of the front end of the transfer pipe (162), the spiral (140) moves the black powder and the current collector mixture toward the screw conveyor (160) when the low-temperature pyrolysis furnace (110) is rotated, and the bucket (150) introduces the black powder and the current collector mixture into the inlet (162a) while being moved from bottom to top inside the low-temperature pyrolysis furnace (110) when the low-temperature pyrolysis furnace (110) is rotated.

16. A system for separating a cathode material of a waste lithium secondary battery using an oxidation reaction of an anode material and a reduction reaction of the cathode material, the system recovering cathode active materials (Co, Ni, and Mn) from black powder in which raw materials (Co, Ni, Mn, Li, and C) for the cathode and anode materials are mixed, the system comprising:

>a low-temperature pyrolysis furnace (110) having an inlet (112) into which a waste lithium secondary battery scrap is introduced, and a closed space (113) formed therein;
>an electric heating device (130) installed on an outside of the low-temperature pyrolysis furnace (110), and configured to heat the low-temperature pyrolysis furnace (110);
>a screw conveyor (160) installed at a rear end of the low-temperature pyrolysis furnace (110) and configured to transfer the black powder and the current collector mixture; and
>a magnetic separator (190) configured to separate the black powder into the cathode active materials (Co, Ni, and Mn) moved in the direction of a magnetic force and an anode active material (C) moved in the opposite direction of the magnetic force.

**17.** The system of claim 16, further comprising:

>a low-temperature pyrolysis furnace rotation module (120) configured to rotate the low-temperature pyrolysis furnace (110) in a predetermined direction or in the opposite direction;
>a spiral (140) installed inside the low-temperature pyrolysis furnace (110), and configured to stir the waste lithium secondary battery scrap and the black powder and to promote the reduction reaction of the cathode material and the oxidation reaction of the anode material;
>a bucket (150) installed inside the low-temperature pyrolysis furnace (110) and configured to extract the black powder and the current collector mixture;
>a main hopper (180) configured to store the black powder and the current collector mixture extracted by the low-temperature pyrolysis furnace (110).

**FIG. 1**

waste lithium secondary battery scrap

100

130 · F · 111 · 121 · 1

110 · 114 · 130 · G

121 · F · 122 · 123 · 124 · 120

171 · 172 · 170 · 163 · 165 · 160

180 (black powder + current collector mixture)

190 magnetic separator

**FIG. 2**

start

introducing waste lithium secondary battery scrap,
and rotating and heating low-temperature pyrolysis furnace — S10

causing explosive reaction of lithium,
and gasifying and discharging electrolyte,
separator, and binder — S20

syngas

recycle

recovering ferromagnetism of cathode active materials
(Co, Ni, and Mn) by reducing cathode material
through oxidation-reduction reaction
between cathode material and anode material — S30

extracting black powder
and current collector mixture (Cu and Al)
and transferringsame to
outsideof low-temperature pyrolysis furnace — S40

separatingcathode active materials (Co, Ni, and Mn)
and anode active material (C)
by performing magnetic separation process — S50

end

**FIG. 3**

waste lithium secondary battery scrap ⇨

| heating electric heating device (lithium explosion) |
| pyrolysis of binder, electrolyte, and separator |
| reduction of cathode material, and oxidation of anode material |

⇨ black powder & current collector mixture

⇩

syngas (used as renewable energy)

FIG. 4

EP 4 190 925 A1

**FIG. 5**

black powder +
current collector mixture

waste lithium secondary
battery scrap

**FIG. 6**

waste lithium secondary battery scrap

EP 4 190 925 A1

FIG.7

Europäisches
Patentamt

European
Patent Office

Office européen
des brevets

# EUROPEAN SEARCH REPORT

**Application Number**

EP 21 21 6155

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 102 253 804 B1 (AHN HYO SOO [KR]; SHIN HAE CHEOL [KR]) 18 May 2021 (2021-05-18) * figure 1 * * paragraphs [0010], [0045], [0055], [0057], [0065], [0066], [0069], [0070] * ----- | 1-17 | INV. C22B7/00 C22B26/12 H01M10/54 C22B23/02 C22B47/00 B03C1/02 B07B1/22 B07B1/28 |
| X | US 2013/256198 A1 (ELLIS TIMOTHY W [US] ET AL) 3 October 2013 (2013-10-03) * example 5 * * paragraph [0067] * ----- | 7 | |
| A | CN 111 916 862 B (LANXI YISHENG NEW ENERGY CO LTD) 17 September 2021 (2021-09-17) * claim 1 * * paragraph [0003] * ----- | 8-16 | |

**TECHNICAL FIELDS SEARCHED (IPC)**

C22B
H01M
B07B
B03C

The present search report has been drawn up for all claims

| Place of search | Date of completion of the search | Examiner |
|---|---|---|
| The Hague | 25 May 2022 | Porté, Olivier |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

& : member of the same patent family, corresponding
      document

EPO FORM 1503 03.82 (P04C01)

**EP 4 190 925 A1**

## ANNEX TO THE EUROPEAN SEARCH REPORT
## ON EUROPEAN PATENT APPLICATION NO.

EP 21 21 6155

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2022

| Patent document cited in search report | | Publication date | Patent family member(s) | | Publication date |
|---|---|---|---|---|---|
| KR 102253804 | B1 | 18-05-2021 | NONE | | |
| US 2013256198 | A1 | 03-10-2013 | CA | 2869154 A1 | 03-10-2013 |
| | | | CN | 104394995 A | 04-03-2015 |
| | | | EP | 2830776 A1 | 04-02-2015 |
| | | | JP | 6247681 B2 | 13-12-2017 |
| | | | JP | 2015516653 A | 11-06-2015 |
| | | | KR | 20150021492 A | 02-03-2015 |
| | | | MX | 355395 B | 18-04-2018 |
| | | | TW | 201349628 A | 01-12-2013 |
| | | | US | 2013256198 A1 | 03-10-2013 |
| | | | US | 2016030948 A1 | 04-02-2016 |
| | | | US | 2019039075 A1 | 07-02-2019 |
| | | | US | 2021370314 A1 | 02-12-2021 |
| | | | WO | 2013148809 A1 | 03-10-2013 |
| CN 111916862 | B | 17-09-2021 | NONE | | |

For more details about this annex : see Official Journal of the European Patent Office, No. 12/82

**EP 4 190 925 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210170935
- KR 102209517